# EUROPÄISCHE PATENTSCHRIFT

(11) **EP 3 325 422 B1**
(45) Veröffentlichungstag und Bekanntmachung des Hinweises auf die Patenterteilung: **06.11.2019**
(21) Anmeldenummer: 16732916.8
(22) Anmeldetag: 02.06.2016
(51) Int. Cl.: C04B 20/06

(54) **VERFAHREN UND VORRICHTUNG ZUR HERSTELLUNG EINES GEBLÄHTEN GRANULATS**
METHOD AND DEVICE FOR PRODUCING AN EXPANDED GRANULATE
PROCÉDÉ ET DISPOSITIF DE PRODUCTION D'UN GRANULAT EXPANSÉ

(30) Priorität: 03.06.2015 AT 501082015 U
(43) Veröffentlichungstag der Anmeldung: 30.05.2018
(73) Patentinhaber: Binder + Co AG, 8200 Gleisdorf (AT)
(72) Erfinder: BRUNNMAIR, Ernst Erwin, 8045 Graz (AT); SALCHINGER, Gerhard, 8261 Sinabelkirchen (AT)
(74) Vertreter: KLIMENT & HENHAPEL
(86) Internationale Anmeldenummer: PCT/AT2016/050175
(87) Internationale Veröffentlichungsnummer: WO 2016/191788

(56) Entgegenhaltungen:
- WO-A1-92/06051
- WO-A1-2013/053635
- US-A- 2 431 884

## Beschreibung

### GEBIET DER ERFINDUNG

Die vorliegende Erfindung betrifft ein Verfahren zur Herstellung eines geblähten Granulats aus sandkornförmigem, mineralischem Material mit einem Treibmittel, beispielsweise eines geblähten Granulats aus Perlit- oder Obsidiansand; wobei das Material in einen im Wesentlichen senkrecht stehenden Ofen aufgegeben wird; wobei das Material in einem Ofenschacht des Ofens entlang einer Förderstrecke durch mehrere, vertikal voneinander getrennt angeordnete Heizzonen gefördert wird, wobei jede Heizzone mit zumindest einem unabhängig steuerbaren Heizelement beheizt werden kann; wobei das Material dabei auf eine kritische Temperatur erhitzt wird, bei welcher die Oberflächen der Sandkörner plastisch werden und die Sandkörner aufgrund des Treibmittels gebläht werden; wobei das geblähte Material aus dem Ofen ausgetragen wird.

Die vorliegende Erfindung betrifft weiters eine Vorrichtung zur Herstellung eines geblähten Granulats aus einem sandkornförmigen Material, umfassend einen im Wesentlichen senkrecht stehenden Ofen mit einem Ofenschacht, der ein oberes Ende und ein unteres Ende aufweist, wobei zwischen den beiden Enden eine Förderstrecke verläuft, welche durch mehrere, vertikal voneinander getrennt angeordnete Heizzonen führt, wobei die Heizzonen jeweils zumindest ein voneinander unabhängig steuerbares Heizelement aufweisen, um das Material auf eine kritische Temperatur zu erhitzen und die Sandkörner zu blähen.

### STAND DER TECHNIK

Aus der AT 12878 U1 ist ein Verfahren zum geschlossenzelligen Blähen von mineralischen Materialien, insbesondere von Sanden aus vulkanischen Gesteinen wie z.B. Perlit oder Obsidian, bekannt. Dabei erfolgt das Blähen aufgrund von im Material gebundenem Wasser, das als Treibmittel fungiert, wenn das sandkornförmige Material in einem Schachtofen auf eine kritische Temperatur erhitzt wird, bei welcher die Oberfläche der Sandkörner plastisch wird. Das Material wird von oben in den Ofen aufgegeben und durchfällt aufgrund der Schwerkraft eine Fallstrecke im Ofenschacht.

WO 2013/053635 offenbart ein Verfahren zur Herstellung eines geblähten Granulats aus sandkornförmigem, mineralischem Material mit einem Treibmittel, wobei das Material in einen senkrecht stehenden Ofen aufgegeben wird; wobei das Material in einem Ofenschacht des Ofens entlang einer Förderstrecke durch mehrere, vertikal voneinander getrennt angeordnete Heizzonen gefördert wird, wobei jede Heizzone mit zumindest einem unabhängig steuerbaren Heizelement beheizt werden kann; wobei das Material dabei auf eine kritische Temperatur erhitzt wird, bei welcher die Oberflächen der Sandkörner plastisch werden und die Sandkörner aufgrund des Treibmittels gebläht werden; wobei das geblähte Material aus dem Ofen ausgetragen wird.

Dabei treten Auftriebskräfte auf, die u.a. durch die Dichte des Materials vor und nach dem Blähvorgang sowie durch die Kaminwirkung des Ofenschachts beeinflusst werden. Diese bewirken im Allgemeinen eine Vergrößerung der Verweilzeit des Materials im Ofenschacht, was zum Teil auch ausgenutzt werden kann, um die Verweilzeit im Ofenschacht gezielt zu verlängern. Typischerweise können auf diese Art und Weise Rohsande der Körnungen zwischen 100 µm und 700 µm gebläht werden. Wesentlich kleinere Körnungen des zu blähenden Materials lassen sich mit dem bekannten Verfahren jedoch nicht realisieren, da die Sinkgeschwindigkeit des Sands im (gasgefüllten) Ofenschacht mit geringerer Körnung abnimmt. Ab einer gewissen minimalen Korngröße können daher keine noch kleineren Korngrößen für das bekannte Blähverfahren verwendet werden, da die Auftriebskräfte für diese noch kleineren Korngrößen zu groß sind. D.h. diese Sandkörner gelangen nicht mehr durch den Ofenschacht, wobei es insbesondere zu einem Anbacken des heißen Materials am Ofenschacht kommt. Dies bedeutet z.B. wiederum, dass das bei der Aufbereitung von Vulkansanden zwangsläufig anfallende Feinmaterial mit Körnungen von kleiner 100 µm nicht zu einem wertvollen Endprodukt in Form von geblähten Sandkörnern bzw. Mikrosphären verarbeitet werden kann, sondern bloß unbrauchbaren Abfall darstellt.

### AUFGABE DER ERFINDUNG

Es ist daher Aufgabe der vorliegenden Erfindung, ein verbessertes Blähverfahren, das die oben genannten Nachteile vermeidet und insbesondere das Blähen von Feinmaterial zulässt, zur Verfügung zu stellen sowie eine Vorrichtung zur Durchführung des verbesserten Verfahrens.

### DARSTELLUNG DER ERFINDUNG

Kern der Erfindung ist es, die Förderung des sandkornförmigen Materials durch den Ofenschacht mittels einer Luftströmung vorzunehmen, indem das Material gemeinsam mit einer Luftmenge in den Ofenschacht aufgegeben wird. Um zu verhindern, dass entstehende Auftriebskräfte dazu führen, dass die Verweilzeit unkontrolliert groß wird, geschieht die Förderung mittels der Luft bzw. Luftströmung von unten nach oben, also gegen die Schwerkraft. Auf diese Weise kann sichergestellt werden, dass das Blähen erst in der oberen Hälfte, vorzugsweise erst im obersten Drittel des Ofenschachts bzw. einer Förderstrecke durch den Ofenschacht erfolgt. Dies wiederum ermöglicht es, ein Anbacken der heißen Sandkörner an einer Innenwand des Ofenschachts zu vermeiden. Da somit die Verweilzeit der bereits geblähten Sandkörner entsprechend klein gehalten werden kann, kann nicht nur das Anbacken an der Innenwand des Ofenschachts, sondern auch ein Verkleben der geblähten Sandkörner aneinander gezielt minimiert oder verhindert werden, wenn dieses Verkleben vermieden werden soll. Insgesamt kann somit Feinmaterial mit Durchmessern von kleiner 100 µm, das bei der Aufbereitung bislang lediglich Abfall darstellte, zu einem wertvollen Endprodukt in Form von geblähten Mikrosphären verarbeitet werden.

Daher ist es bei einem Verfahren zur Herstellung eines geblähten Granulats aus sandkornförmigem, mineralischem Material mit einem Treibmittel, beispielsweise eines geblähten Granulats aus Perlit- oder Obsidiansand; wobei das Material in einen im Wesentlichen senkrecht stehenden Ofen aufgegeben wird; wobei das Material in einem Ofenschacht des Ofens entlang einer Förderstrecke durch mehrere, vertikal voneinander getrennt angeordnete Heizzonen gefördert wird, wobei jede Heizzone mit zumindest einem unabhängig steuerbaren Heizelement beheizt werden kann; wobei das Material dabei auf eine kritische Temperatur erhitzt wird, bei welcher die Oberflächen der Sandkörner plastisch werden und die Sandkörner aufgrund des Treibmittels gebläht werden; wobei das geblähte Material aus dem Ofen ausgetragen wird, erfindungsgemäß vorgesehen, dass das Aufgeben des Materials gemeinsam mit einer Luftmenge von unten erfolgt, wobei das Material mittels der im Ofenschacht von unten nach oben strömenden, eine Luftströmung ausbildenden Luftmenge von unten nach oben entlang der Förderstrecke gefördert wird und wobei das Blähen der Sandkörner in der oberen Hälfte, vorzugsweise im obersten Drittel der Förderstrecke erfolgt. D.h. insbesondere, dass das Material dem Luftstrom in einer Förderrichtung bzw. in einer Richtung der Luftströmung im Ofenschacht gesehen vor dem ersten Heizelement beigemengt wird. Das Austragen erfolgt vorzugsweise am oberen Ende des Ofenschachts.

Analog ist es bei einer Vorrichtung zur Herstellung eines geblähten Granulats aus einem sandkornförmigen Material, umfassend einen im Wesentlichen senkrecht stehenden Ofen mit einem Ofenschacht, der ein oberes Ende und ein unteres Ende aufweist, wobei zwischen den beiden Enden eine Förderstrecke verläuft, welche durch mehrere, vertikal voneinander getrennt angeordnete Heizzonen führt, wobei die Heizzonen jeweils zumindest ein voneinander unabhängig steuerbares Heizelement aufweisen, um das Material auf eine kritische Temperatur zu erhitzen und die Sandkörner zu blähen, erfindungsgemäß vorgesehen, dass mindestens ein Zuführmittel vorgesehen ist, um das ungeblähte Material gemeinsam mit einer Luftmenge am unteren Ende des Ofenschachts in Richtung oberes Ende des Ofenschachts so in den Ofenschacht einzublasen, dass die Luftmenge eine von unten nach oben strömende Luftströmung ausbildet, mittels welcher das Material von unten nach oben entlang der Förderstrecke gefördert wird, um in der oberen Hälfte, vorzugsweise im obersten Drittel der Förderstrecke gebläht zu werden. Denkbar wäre es z.B. die Luftmenge mittels einer Düse in den Ofenschacht zu blasen und das Material separat, z.B. mittels eines Rohransatzes der aus der Düse austretenden Luftströmung, vorzugsweise am Ort der höchsten Luftgeschwindigkeit zuzuführen. Dabei kann das Material dosiert zugeführt werden, wobei zur Dosierung sowohl eine volumetrische als auch eine gravitäre Aufgabe des Materials in Frage kommt.

Aufgrund der Erkenntnis, dass es sich bei dem Blähvorgang um einen isenthalpen Prozess handelt, der mit einem Temperatursturz einhergeht, kann letzterer gezielt detektiert werden. Dies kann wiederum dazu benutzt werden, eine Temperaturbehandlung der geblähten Sandkörner nach dem eigentlichen Blähvorgang festzulegen, um die Oberflächeneigenschaften der geblähten Sandkörner zu beeinflussen. Z.B. kann ein neuerliches Aufheizen über die kritische Temperatur verhindert werden, um ein Aufreißen der Oberfläche zu unterbinden. Oder es kann ein solcher erneuter Temperaturanstieg bewusst eingeleitet werden, wenn ein Aufreißen der Oberfläche der Sandkörner bewusst in Kauf genommen oder sogar erzielt werden soll. Daher ist es bei einer bevorzugten Ausführungsform des erfindungsgemäßen Verfahrens vorgesehen, dass bei Detektion einer ersten Verringerung der Temperatur des Materials zwischen zwei aufeinander folgenden Positionen entlang der Förderstrecke die Heizelemente entlang der verbleibenden Förderstrecke in Abhängigkeit von der kritischen Temperatur geregelt werden, um eine Zunahme der Materialtemperatur entlang der verbleibenden Förderstrecke auf oder über die kritische Temperatur zu verhindern oder gezielt zu ermöglichen.

Analog ist es bei einer bevorzugten Ausführungsform der erfindungsgemäßen Vorrichtung vorgesehen, dass Materialtemperaturmessmittel zur direkten und/oder indirekten Messung der Temperatur und/oder der Temperaturänderung des Materials vorgesehen sind sowie eine Regel- und Steuereinheit, die mit den Materialtemperaturmessmitteln und mit den Heizelementen der Heizzonen verbunden ist, um eine erste Verringerung der Temperatur des Materials, bevorzugt von mindestens 20°C, zwischen zwei aufeinander folgenden Positionen entlang der Förderstrecke zu detektieren, und dass die Heizelemente durch die Regel- und Steuereinheit in Abhängigkeit von der kritischen Temperatur regelbar sind, um eine Zunahme der Materialtemperatur entlang der verbleibenden Förderstrecke auf oder über die kritische Temperatur zu verhindern oder gezielt zu ermöglichen.

Als Materialtemperaturmessmittel kommen beispielsweise Temperatursensoren in Frage, welche entlang der Förderstrecke angeordnet sind und in Kontakt mit dem Material kommen können oder nur für die Bestimmung der Temperatur im Ofenschacht in den jeweiligen Heizzonen vorgesehen sind, ohne mit dem Material in direkten Kontakt zu kommen.

Weiters lässt sich die Materialtemperatur und insbesondere die Materialtemperaturänderung indirekt besonders einfach bestimmen, indem als Materialtemperaturmessmittel Messgeräte zur Bestimmung der Leistungsaufnahme der Heizelemente vorgesehen sind. Bei elektrisch betriebenen Heizelementen können diese Messgeräte im Wesentlichen auf solche zur Messung der Stromaufnahme beschränkt werden, wobei von einer bekannten Versorgungsspannung ausgegangen wird.

Die Temperaturänderung des Materials wird durch die Bestimmung der Änderung des Wärmeflusses von den Heizelementen zum Material ermöglicht, welcher von der Temperaturdifferenz zwischen den Heizelementen und dem Material abhängt. Während des Aufheizens des Materials verringert sich die Temperaturdifferenz zwischen Heizelementen und Material sukzessive. Entsprechend verringert sich der Wärmefluss, d.h. die festgestellte Änderung des Wärmeflusses von einer Heizzone zur nächsten ist zunächst eine Abnahme. Entsprechend nimmt die Leistungsaufnahme der Heizelemente entlang der Förderstrecke zunächst ab. Unmittelbar nach dem Blähvorgang und dem damit einhergehenden Temperatursturz ist die Temperaturdifferenz zwischen Material und Heizelementen deutlich größer als unmittelbar vor dem Blähvorgang. Entsprechend nimmt auch der Wärmefluss zu, d.h. die festgestellte Änderung des Wärmeflusses bzw. der Leistungsaufnahme der Heizelemente von einer Heizzone zur nächsten ist nun eine Zunahme. Diese detektierte Zunahme des Wärmeflusses bzw. der Leistungsaufnahme der Heizelemente eignet sich daher, um den Temperatursturz und dessen Bereich im Ofenschacht festzustellen.

Daher ist es bei einer bevorzugten Ausführungsform des erfindungsgemäßen Verfahrens vorgesehen, dass die Temperaturänderung des Materials entlang der Förderstrecke indirekt durch Bestimmung einer Leistungsaufnahme der Heizelemente gemessen wird.

In einer weiteren bevorzugten Ausführungsform werden die Ergebnisse von Temperaturmessungen mit den Ergebnissen der Bestimmung der Leistungsaufnahme der Heizelemente verglichen bzw. in Relation gesetzt und so der Ort des Blähens detektiert, um die Genauigkeit dieser Detektion zu erhöhen. Dabei können die Temperaturmessungen mittels Temperatursensoren durchgeführt werden, wobei jedoch keine direkte Temperaturmessung des Materials erfolgen muss.

Das sehr feine staubförmige bzw. sandkornförmige, zu blähende Material wird vorzugsweise aufbereitet, bevor es dem Blähprozess zugeführt wird, da bei der Förderung des Materials Agglomerationen normalerweise nicht zu vermeiden sind. Solche Agglomerationen werden durch Feuchtigkeit des Materials begünstigt. Wenn entsprechende Agglomerate gebläht würden, würde man Agglomerate aus geblähten Sandkörnern erhalten, was jedoch in der Regel nicht gewünscht ist. Stattdessen soll es sich beim Endprodukt im Normalfall um einzelne Mikrosphären handeln. Daher ist üblicherweise ein Trocknungsprozess bei der Aufbereitung des Materials vorzusehen.

Doch selbst im trockenen Zustand ist die Förderung von staubförmigem Material praktisch kaum ohne Agglomerationen möglich. Beispielsweise bilden sich auch bei der Förderung von trockenem staubförmigem Material mittels Vibrationsrinnen unerwünschte Agglomerate. Daher ist es erfindungsgemäß vorgesehen, das Material vor dem Blähprozess zu dispergieren, um das Blähen von Agglomeraten zu vermeiden. Entsprechend ist es bei einer bevorzugten Ausführungsform des erfindungsgemäßen Verfahrens vorgesehen, dass das Material in der Luftmenge dispergiert wird, vorzugsweise bevor das Material in den Ofenschacht eintritt.

Das Dispergieren kann dabei auf unterschiedliche Arten erfolgen. Beispielsweise wäre es denkbar, das Material in der Luftmenge Ultraschall auszusetzen, um das Material zu dispergieren.

Eine besonders einfache und elegante Methode besteht darin, für das Dispergieren die Luftmenge selbst zu benutzen. Dabei muss für ein gutes Dispergierergebnis lediglich sichergestellt werden, dass die Luftmenge mit einer hinreichend großen Geschwindigkeit strömt, weshalb vorzugsweise die Verwendung von Druckluft vorgesehen ist, die gleichzeitig die Luftmenge ausbildet. Ein besonders kompakter Aufbau lässt sich realisieren, wenn die Druckluft und das Material durch eine Feststoff/Luft-Düse geführt werden. Entsprechend ist es bei einer bevorzugten Ausführungsform des erfindungsgemäßen Verfahrens vorgesehen, dass das Dispergieren mittels Druckluft in einer Feststoff/Luft-Düse, vorzugsweise mit einem nachgeschalteten, an den Ofenschacht anschließenden Diffusor, erfolgt.

Analog ist es bei einer bevorzugten Ausführungsform der erfindungsgemäßen Vorrichtung vorgesehen, dass das mindestens eine Zuführmittel eine Feststoff/Luft-Düse umfasst, welcher Druckluft und das ungeblähte Material zuführbar sind, um das Material in der Luftmenge zu dispergieren. D.h. die Luftmenge wird letztlich mittels der Düse zur Verfügung gestellt und in den Ofenschacht eingeblasen. Weiters ist es bei einer besonders bevorzugten Ausführungsform der erfindungsgemäßen Vorrichtung vorgesehen, dass die Vorrichtung weiters einen Diffusor umfasst, der der Feststoff/Luft-Düse nachgeschaltet ist und an das untere Ende des Ofenschachts anschließt. Um dabei ein besonders gutes Dispergierergebnis zu erzielen und einen optimalen Übergang des dispergierten Materials in den Ofenschacht zu ermöglichen, ist es bei einer besonders bevorzugten Ausführungsform der erfindungsgemäßen Vorrichtung vorgesehen, dass der Diffusor mit einem radialen lichten Endquerschnitt an das untere Ende des Ofenschachts anschließt, der gleich einem radialen lichten Eintrittsquerschnitt des Ofenschachts an dessen unterem Ende ist.

Durch die Luftströmung kann sichergestellt werden, dass kein geblähtes Material im Ofenschacht zurückbleibt. Hierfür genügt es in der Regel, die Luftmenge unter Berücksichtigung des Ofenschachtquerschnitts so zu bemessen, dass sichergestellt ist, dass der im Luftstrom dispergierte, noch nicht geblähte Sand gerade nicht gegen die Luftströmung instabil zurückfällt. Entsprechend ist es bei einer bevorzugten Ausführungsform des erfindungsgemäßen Verfahrens vorgesehen, dass die Luftmenge so bemessen und aufgegeben wird, dass das aufgegebene Material im Ofenschacht nicht gegen die Luftströmung nach unten fällt.

Die Erwärmung der Luft und der Sandkörner im Ofenschacht sowie die Blähung der Sandkörner zu Mikrosphären bewirken, dass letztere nicht im Ofenschacht zurückbleiben, sondern mit der Luft gemeinsam aus dem Ofenschacht ausgetragen werden. Daher ist es bei einer bevorzugten Ausführungsform des erfindungsgemäßen Verfahrens vorgesehen, dass das Austragen des geblähten Materials gemeinsam mit im Ofenschacht erhitzter Luft in einem Gas-Material-Strom erfolgt. Das Vorliegen eines Gas-Material-Stroms bedeutet nicht, dass die Luft gleich schnell wie das Material strömen muss. In der Regel strömt die Luft schneller, sodass eine Relativgeschwindigkeit zwischen Gas und Material vorhanden ist, wobei diese Relativgeschwindigkeit entlang der Förderstrecke üblicherweise abnimmt, d.h. weiter unten im Ofenschacht ist die Relativgeschwindigkeit üblicherweise größer als weiter oben.

Um das erfindungsgemäße Verfahren weiter zu verbessern, kann bei der geschilderten Bemessung der Luftmenge außerdem eine Grenzschichtströmung, die sich unvermeidlich von selbst in einem Bereich nahe einer Innenwand des Ofenschachts mit einer gewissen radialen Ausdehnung ausbildet, berücksichtigt werden. Entsprechend ist es bei einer bevorzugten Ausführungsform des erfindungsgemäßen Verfahrens vorgesehen, dass die Luftmenge so bemessen und aufgegeben wird, dass an einem oberen Ende des Ofenschachtes eine mittlere Geschwindigkeit der Luftströmung in einem Bereich von 50% bis 95% einer maximalen Geschwindigkeit einer Grenzschichtströmung liegt, wobei die Grenzschichtströmung durch die Luftströmung im Bereich einer den Ofenschacht radial begrenzenden Innenwand gebildet wird und eine gegenüber der restlichen Luftströmung erhöhte Konzentration an Material aufweist und wobei sich die mittlere Geschwindigkeit der Luftströmung durch Mittelung der Geschwindigkeit der Luftströmung radial von einem radialen Zentrum des Ofenschachts bis zur Innenwand ergibt. Durch diese Auslegung der Luftmenge bzw. Luftströmung kann ein Anbacken der Sandkörner an der Innenwand praktisch vollständig ausgeschlossen werden. Ein weiterer Vorteil dieser Auslegung der Luftmenge bzw. Luftströmung besteht in der sich ergebenden optimalen Verweilzeit des Materials im Ofenschacht, die ein zu frühes Blähen und die Gefahr eines Überblähens vermeidet. Ggf. kann durch eine geringfügige Erhöhung der Luftmenge das Blähen in Richtung Ofenschachtende, d.h. nach oben, verlagert werden, um die Gefahr des Überblähens weiter zu minimieren.

Es sei bemerkt, dass der Ofenschacht nicht unbedingt drehsymmetrisch geformt sein muss und dennoch ein radiales Zentrum aufweisen kann, das ein Zentrum des lichten Querschnitts des Ofenschachts quer, vorzugsweise normal zur Förderrichtung ist. Die radial begrenzende Innenwand umrandet diesen lichten Querschnitt.

Um die Weiterverarbeitung bzw. Handhabung des geblähten Materials zu erleichtern, ist es bei einer bevorzugten Ausführungsform des erfindungsgemäßen Verfahrens vorgesehen, dass dem Gas-Material-Strom Kühlluft beigemengt wird, um das geblähte Material zu kühlen. Dies vereinfacht z.B. das problemlose Abscheiden des geblähten Materials in einem Filter und/oder die gefahrlose Lagerung des geblähten Materials in einem Vorratsbehälter.

Analog ist es bei einer bevorzugten Ausführungsform der erfindungsgemäßen Vorrichtung vorgesehen, dass mindestens ein Kühlluftzuführmittel vorgesehen ist, um einem am oberen Ende aus dem Ofenschacht entweichenden Gas-Material-Strom Kühlluft zur Kühlung des geblähten Materials zuzuführen. Das mindestens eine Kühlluftzuführmittel umfasst dabei typischerweise eine Zuleitung für die Kühlluft und eine Düse, in welcher die Zuleitung mündet und mit welcher die Kühlluft in den Gas-Material-Strom eingeblasen wird.

Um das geblähte Material bzw. die Mikrosphären aus weiterverarbeiten, insbesondere abpacken und/oder lagern zu können, ist es bei einer bevorzugten Ausführungsform des erfindungsgemäßen Verfahrens vorgesehen, dass das geblähte Material aus dem Gas-Material-Strom mittels eines Filters abgeschieden wird.

Analog ist es bei einer bevorzugten Ausführungsform der erfindungsgemäßen Vorrichtung vorgesehen, dass ein Filter vorgesehen ist, um das geblähte Material aus einem am oberen Ende aus dem Ofenschacht entweichenden Gas-Material-Strom abzuscheiden.

Bei einer besonders bevorzugten Ausführungsform des erfindungsgemäßen Verfahrens ist es vorgesehen, das Abscheiden mittels des Filters erfolgt, nachdem das geblähte Material auf eine Verarbeitungstemperatur abgekühlt worden ist, wobei die Verarbeitungstemperatur vorzugsweise kleiner gleich 100°C ist. Dies erlaubt einen kostengünstigen Aufbau des Filters, da die Anforderungen an die Materialien des Filters hinsichtlich Hitzebeständigkeit heruntergesetzt werden können.

Analog ist es bei einer besonders bevorzugten Ausführungsform der erfindungsgemäßen Vorrichtung vorgesehen, dass das mindestens eine Kühlluftzuführmittel dem Filter vorgeschaltet ist.

Bei einer bevorzugten Ausführungsform des erfindungsgemäßen Verfahrens ist es vorgesehen, dass nach dem Austragen die Größe und/oder Dichte der geblähten Sandkörner bestimmt wird. Dies ermöglicht es, Prozessparameter - beispielsweise die Temperatur, auf die geheizt wird, oder die aufgegebene Menge an Material und Luft oder die mittlere Geschwindigkeit der Luftströmung im Ofenschacht - in Abhängigkeit des Ergebnisses der Messung von Größe und Dichte des geblähten Materials festzulegen und/oder zu adaptieren. Auf diese Weise kann eine, insbesondere automatische Regelung erfolgen, um die gewünschte Qualität der produzierten Mikrosphären sicherzustellen.

Analog ist es bei einer besonders bevorzugten Ausführungsform der erfindungsgemäßen Vorrichtung vorgesehen, dass Mittel zur Bestimmung der Größe und/oder der Dichte der geblähten Sandkörner vorgesehen sind. Entsprechende Sensoren, z.B. zur optischen Bestimmung von Größe und Dichte sind grundsätzlich am Markt verfügbar.

Insbesondere kann auf diese Weise die gewünschte Größe der erzeugten Mikrosphären sichergestellt werden, wobei als Mikrosphären typischerweise geblähte Sandkörner mit einem Durchmesser kleiner gleich 150 µm verstanden werden. Entsprechend ist es bei einer bevorzugten Ausführungsform des erfindungsgemäßen Verfahrens vorgesehen, dass die geblähten Sandkörner einen mittleren Durchmesser kleiner gleich 150 µm, bevorzugt kleiner gleich 100 µm, besonders bevorzugt kleiner gleich 75 µm aufweisen.

Es sei bemerkt, dass zur Regelung bzw. Einstellung der Prozessparameter auch noch weitere Kontrollmessungen zusätzlich oder alternativ durchgeführt werden können. Z.B. kann mit optischen Sensoren eine automatisierte optische Inspektion der Oberflächenqualität der erzeugten Mikrosphären durchgeführt werden, bei welcher festgestellt wird, ob diese offen oder geschlossen sind.

### KURZE BESCHREIBUNG DER FIGUREN

Die Erfindung wird nun anhand eines Ausführungsbeispiels näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: eine schematische Darstellung einer erfindungsgemäßen Vorrichtung in einem Fließschema des erfindungsgemäßen Verfahrens
- Fig. 2: ein Diagramm einer Geschwindigkeitsverteilung einer Luftströmung in einem Ofenschacht gemäß der Schnittlinie A-A in Fig. 1

### WEGE ZUR AUSFÜHRUNG DER ERFINDUNG

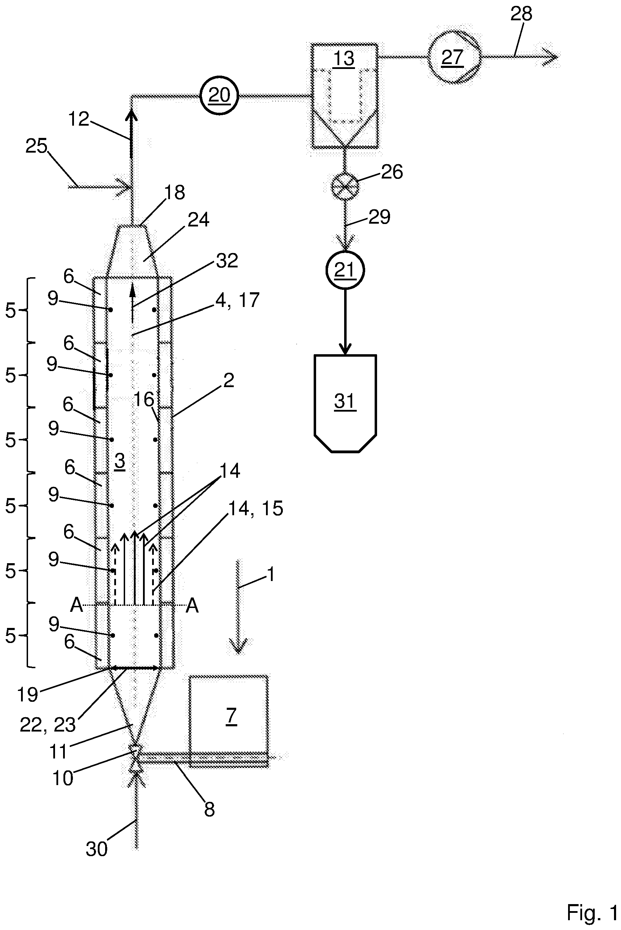

Fig. 1 zeigt eine schematische Darstellung einer erfindungsgemäßen Vorrichtung, mit welcher ein erfindungsgemäßes Verfahren zur Herstellung von geblähten Mikrosphären 29 bzw. von geblähtem Granulat 29 durchgeführt werden kann. Ausgangsmaterial für die geblähten Mikrosphären 29 ist ein sandförmiges bzw. staubförmiges Material mit einem Treibmittel. Im gezeigten Ausführungsbeispiel ist Perlitsand 1 als Material angenommen, wobei in Perlit Wasser gebunden ist, das beim Blähprozess als Treibmittel fungiert.

Zur Durchführung des Blähprozesses umfasst die erfindungsgemäße Vorrichtung einen Ofen 2 mit einem Ofenschacht 3, der sich senkrecht von einem unteren Ende 19 zu einem oberen Ende 18 von unten nach oben erstreckt. Zwischen den Enden 19, 18 verläuft eine Förderstrecke 4, die in Fig. 1 durch eine strichlierte Linie angedeutet ist. Diese Linie markiert gleichzeitig ein radiales Zentrum 17 des Ofenschachts 3. Im Ofen 2 sind mehrere übereinander bzw. in einer Förderrichtung 32 gesehen nacheinander angeordnete Heizzonen 5 vorgesehen, durch die die Förderstrecke 4 führt. Jede Heizzone 5 ist mit mindestens einem unabhängig steuerbaren Heizelement 6 versehen, bei welchem es sich z.B. um ein elektrisches Heizelement 6 handeln kann. Mittels der Heizelemente 6 kann der Perlitsand 1 im Ofen 2 bzw. Ofenschacht 3 auf eine kritische Temperatur gebracht werden, bei welcher die Oberflächen der Perlitsandkörner 1 plastisch werden und die Perlitsandkörner 1 aufgrund des Treibmittels - hier Wasserdampf - gebläht werden.

Erfindungsgemäß wird der Perlitsand 1 gemeinsam mit einer Luftmenge am unteren Ende 19 in den Ofen 2 bzw. Ofenschacht 3 aufgegeben und in Richtung oberes Ende 18, also von unten nach oben, geblasen. Für dieses Einblasen ist eine Feststoff/LuftDüse 10 vorgesehen. Dieser wird einerseits der Perlitsand 1, der in einem Feinsandbehälter 7 aufbewahrt ist, über eine Dosierschnecke 8 zugeführt. Andererseits wird der Feststoff/Luft-Düse 10 Druckluft 30 zugeführt. Die Feststoff/Luft-Düse 10 stellt sicher, dass sich eine von unten nach oben strömende Luftströmung 14 ausbildet, mittels welcher der Perlitsand 1 von unten nach oben entlang der Förderstrecke 4 in Förderrichtung 32 gefördert wird. Durch die Förderung von unten nach oben wird verhindert, dass entstehende Auftriebskräfte dazu führen, dass die Verweilzeit des Perlitsands 1 bzw. des geblähten Granulats 29 im Ofenschacht 3 unkontrolliert groß wird. Gleichzeitig kann sichergestellt werden, dass das Blähen erst in der oberen Hälfte, vorzugsweise im obersten Drittel des Ofenschachts 3 bzw. der Förderstrecke 4 erfolgt, wodurch ein Anbacken des Perlitsands 1 bzw. des geblähten Granulats 29 an einer Innenwand 16 des Ofenschachts 3 vermieden werden kann sowie ein Verkleben einzelner Körner des Perlitsands 1 bzw. des geblähten Granulats 29 untereinander.

Typischerweise hat der Perlitsand 1 unmittelbar vor seiner Blähung ca. 780°C. Da es sich bei dem Blähvorgang, bei dem sich die Perlitsandkörner 1 ausdehnen, um einen isenthalpen Prozess handelt, kühlt der Perlitsand 1 beim Blähen ab, typischerweise auf ca. 590°C, was auch als Temperatursturz bezeichnet wird. Je nach Material beträgt der Temperatursturz mindestens 20°C, vorzugsweise mindestens 100°C. Eine Detektion des Temperatursturzes bzw. die Detektion der Position, an welcher der Temperatursturz im Ofenschacht 3 auftritt, ermöglicht es, die Heizelemente 6 entlang der verbleibenden Förderstrecke 4 gezielt regeln zu können, um insbesondere die Oberflächenstruktur bzw. Oberflächeneigenschaften des geblähten Granulats 29 zu beeinflussen.

Entsprechend ist entlang der Förderstrecke 4 eine Vielzahl von Positionen 9 für eine Temperaturmessung vorgesehen, um die Position des Temperatursturzes bestimmen zu können. Dabei findet im vorliegenden Ausführungsbeispiel keine absolute Temperaturmessung statt, sondern es wird die Leistungsaufnahme der Heizelemente 6 bestimmt bzw. wird bestimmt, wie sich diese Leistungsaufnahme entlang der Förderstrecke 4 ändert. Unmittelbar nach dem Blähvorgang und dem damit einhergehenden Temperatursturz ist die Temperaturdifferenz zwischen dem geblähten Granulat 29 und den Heizelementen 6 deutlich größer als zwischen dem Perlitsand 1 und den Heizelementen 6 unmittelbar vor dem Blähvorgang. Entsprechend nimmt auch der Wärmefluss zu. D.h. die festgestellte Änderung des Wärmeflusses bzw. der Leistungsaufnahme der Heizelemente 6 von einer Heizzone 5 zur nächsten ist eine Zunahme, wohingegen sich aufgrund der sukzessiven Erwärmung des Perlitsands 1 vor dem Blähvorgang die Änderung der Leistungsaufnahme entlang der Förderstrecke 4 eine Abnahmen ist.

Zur Regelung, insbesondere zur Regelung entlang der nach dem Temperatursturz verbleibenden Förderstrecke 4 sind die Heizelemente 6 mit einer Regel- und Steuereinheit (nicht dargestellt) verbunden, sodass eine Zunahme der Materialtemperatur entlang der verbleibenden Förderstrecke 4 auf oder über die kritische Temperatur gezielt verhindert oder ermöglicht werden kann.

Die derart erzeugten Mikrosphären 29 haben einen Durchmesser kleiner gleich 150 µm. Um im Endprodukt tatsächlich einzelne Mikrosphären 29 zu erhalten und keine zu großen Partikel in Form von Agglomeraten von Mikrosphären 29, muss verhindert werden, dass der im Ofenschacht befindliche Perlitsand 1 Agglomerate bildet, die dann zu entsprechenden Agglomeraten von Mikrosphären 29 gebläht werden. Eine Agglomeration des Perlitsands 1 wird durch Feuchtigkeit begünstigt. Daher wird der Perlitsand 1 aufbereitet, bevor er in den Feinsandbehälter 7 gelangt, wobei die Aufbereitung einen Trocknungsprozess beinhaltet. Da jedoch selbst im trockenen Zustand eine Förderung des feinstaubigen Perlitsands 1 kaum ohne Bildung von Agglomeraten möglich ist, wird der Perlitsand 1 in der Luftmenge, mit der er in den Ofenschacht 3 aufgegeben wird, dispergiert.

Das Dispergieren geschieht im gezeigten Ausführungsbeispiel mittels der Feststoff/Luft-Düse 10. Zusätzlich ist ein Diffusor 11 vorgesehen, der einerseits an die Feststoff/LuftDüse 10 anschließt und andererseits an das untere Ende 19 des Ofenschachts 3. Der Diffusor 11 weist einen lichten radialen Querschnitt auf, der sich in Förderrichtung 32 gesehen zu einem radialen Endquerschnitt 22 erweitert. Der radiale Endquerschnitt 22 ist dabei gleich groß wie ein radialer Eintrittsquerschnitt 23 des Ofenschachts 3 am unteren Ende 19, was einen optimalen Übergang des dispergierten Perlitsands 1 vom Diffusor 11 in den Ofenschacht 3 ermöglicht.

Nach dem Blähvorgang wird das geblähte Granulat 29 gemeinsam mit der im Ofenschacht 3 erwärmten Luft am oberen Ende 18 des Ofenschachts 3 nach Passieren eines Endabschnitts 24 des Ofenschachts 3 ausgetragen. D.h. die Mikrosphären 29 liegen in einem Gas-Material-Strom 12 vor.

Über eine Zuleitung 25 wird dem Gas-Material-Strom 12, nachdem dieser aus dem Ofenschacht 3 ausgetreten ist, Kühlluft beigemengt. Hierdurch wird das geblähte Granulat 29 abgekühlt, vorzugsweise auf eine Verarbeitungstemperatur kleiner gleich 100°C, was die weitere Handhabung des geblähten Granulats 29, insbesondere bei dessen Weiterverarbeitung erleichtert.

Der Gas-Material-Strom 12 wird einer Partikelgrößenmesseinrichtung 20 zugeführt, um die Größe der Mikrosphären 29 zu bestimmen.

Anschließend wird der Gas-Material-Strom 12 einem Filter 13 zugeführt, um das geblähte Granulat 29 aus dem Gas-Material-Strom 12 abzuscheiden. Eine durch den Filter 13 gereinigte Abluft 28 wird über ein dem Filter 13 nachgeschaltetes Gebläse 27 an die Atmosphäre abgegeben.

Das abgeschiedene geblähte Granulat 29 hingegen wird über eine dem Filter 13 nachgeschaltete Zellradschleuse 26 zunächst einer Dichtemesseinrichtung 21 zugeführt, in welcher die Dichte des geblähten Granulats 29 bestimmt wird, bevor es in einen Silo 31 geleitet wird.

Sowohl als Partikelgrößenmesseinrichtung 20 als auch als Dichtemesseinrichtung 21 können an sich bekannte Einrichtungen verwendet werden, welche beispielsweise auf Basis von optischen Sensoren arbeiten.

Die Bestimmung der Partikelgröße und der Dichte des geblähten Granulats 29 erlaubt es, Prozessparameter wie z.B. die Temperatur bzw. Temperaturverteilung im Ofenschacht 3 bzw. entlang der Förderstrecke 4 oder die aufgegebene Menge Perlitsand 1 oder die aufgegebene Menge Luft einzustellen, in Abhängigkeit von den Messergebnissen der Messeinrichtungen 20, 21. Insbesondere kann somit eine automatische Regelung erfolgen, um die gewünschte Qualität, insbesondere die gewünschte Größe und Dichte der Mikrosphären 29 einzustellen. Beispielsweise kann die Regel- und Steuereinheit (nicht dargestellt) dafür vorgesehen werden, die Messergebnisse der Messeinrichtungen 20, 21 zu verarbeiten und die Prozessparameter entsprechend zu regeln.

Zu den Prozessparametern ist auch die Geschwindigkeit v der Luftströmung 14 im Ofenschacht 3 zu zählen. Dabei ist zu berücksichtigen, dass sich in einem Bereich nahe der Innenwand 16 eine Grenzschichtströmung 15 der Luftströmung 14 ausbildet, welche Grenzschichtströmung 15 eine gewisse radiale Ausdehnung aufweist. Die Grenzschichtströmung 15 zeichnet sich dabei dadurch aus, dass in dieser eine gegenüber der restlichen Luftströmung 14 erhöhte Konzentration von Perlitsand 1 bzw. Mikrosphären 29 vorliegt.

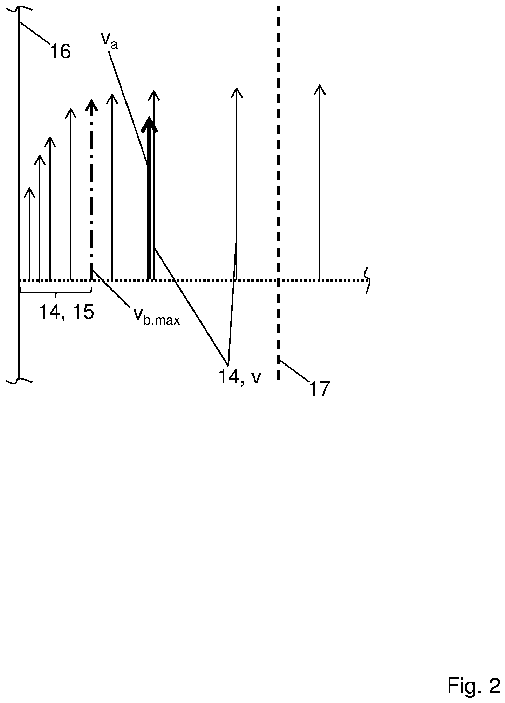

Fig. 2 illustriert die Strömungsverhältnisse entlang eines radialen Schnitts durch den Ofenschacht 3 gemäß der Schnittlinie A-A in Fig. 1. Es ist erkennbar, dass die Geschwindigkeit v in der Grenzschichtströmung 15 von der Innenwand 16 in Richtung zum radialen Zentrum 17 hin zunächst deutlich zunimmt bis zu einer maximalen Geschwindigkeit v_{b,max} der Grenzschichtströmung 15 (in Fig. 2 durch den strichpunktierten Pfeil gekennzeichnet). Weiter zum radialen Zentrum 17 hin nimmt die Geschwindigkeit v nicht oder, wie in Fig. 2 dargestellt, nur mehr geringfügig zu. Mittelt man die Geschwindigkeit v vom radialen Zentrum 17 bis zur Innenwand 16, so ergibt sich eine mittlere Geschwindigkeit vₐ, die in Fig. 2 durch einen dicken Pfeil symbolisiert ist. In aufwendigen Versuchen hat sich gezeigt, dass ein Anbacken des Perlitsands 1 bzw. der Mikrosphären 29 an der Innenwand 16 praktisch vollständig ausgeschlossen werden kann, wenn die Luftströmung 14 so ausgelegt bzw. eingestellt ist, dass am oberen Ende 18 des Ofenschachts 3 die mittlere Geschwindigkeit vₐ in einem Bereich von 50% bis 95% von v_{b,max} liegt. Im dargestellten Ausführungsbeispiel beträgt vₐ ca. 90% von v_{b,max}.

Die Luftströmung 14 kann dabei durch geeignete Wahl bzw. Auslegung der Feststoff/Luft-Düse 10 und/oder durch Wahl eines geeigneten Drucks der Druckluft 30 eingestellt werden. Letzteres kann grundsätzlich ebenfalls mittels der Regel- und Steuereinheit (nicht dargestellt) automatisiert erfolgen.

### BEZUGSZEICHENLISTE

- 1: Perlitsand
- 2: Ofen
- 3: Ofenschacht
- 4: Förderstrecke
- 5: Heizzone
- 6: Heizelement
- 7: Feinsandbehälter
- 8: Dosierschnecke
- 9: Position für Temperaturmessung
- 10: Feststoff/Luft-Düse
- 11: Diffusor
- 12: Gas-Material-Strom
- 13: Filter
- 14: Luftströmung
- 15: Grenzschichtströmung
- 16: Innenwand
- 17: Radiales Zentrum des Ofenschachts
- 18: Oberes Ende des Ofenschachts
- 19: Unteres Ende des Ofenschachts
- 20: Partikelgrößenmesseinrichtung
- 21: Dichtemesseinrichtung
- 22: Radialer Endquerschnitt des Diffusors
- 23: Radialer Eintrittsquerschnitt des Ofenschachts an dessen unterem Ende
- 24: Endabschnitt des Ofenschachts
- 25: Zuleitung für Kühlluft
- 26: Zellradschleuse
- 27: Gebläse
- 28: Gereinigte Abluft
- 29: Geblähtes Granulat / Mikrosphären
- 30: Druckluft
- 31: Silo
- 32: Förderrichtung
- v: Geschwindigkeit der Luftströmung
- vₐ: Mittlere Geschwindigkeit der Luftströmung
- v_{b,max}: Maximale Geschwindigkeit der Grenzschichtströmung

## Patentansprüche

1. Verfahren zur Herstellung eines geblähten Granulats (29) aus sandkornförmigem, mineralischem Material (1) mit einem Treibmittel, beispielsweise eines geblähten Granulats aus Perlit- (1) oder Obsidiansand; wobei das Material (1) in einen im Wesentlichen senkrecht stehenden Ofen (2) aufgegeben wird; wobei das Material (1) in einem Ofenschacht (3) des Ofens (2) entlang einer Förderstrecke (4) durch mehrere, vertikal voneinander getrennt angeordnete Heizzonen (5) gefördert wird, wobei jede Heizzone (5) mit zumindest einem unabhängig steuerbaren Heizelement (6) beheizt werden kann; wobei das Material (1) dabei auf eine kritische Temperatur erhitzt wird, bei welcher die Oberflächen der Sandkörner (1) plastisch werden und die Sandkörner (1) aufgrund des Treibmittels gebläht werden; wobei das geblähte Material (29) aus dem Ofen (2) ausgetragen wird, **dadurch gekennzeichnet, dass** das Aufgeben des Materials (1) gemeinsam mit einer Luftmenge von unten erfolgt, wobei das Material (1) mittels der im Ofenschacht (3) von unten nach oben strömenden, eine Luftströmung (14) ausbildenden Luftmenge von unten nach oben entlang der Förderstrecke (4) gefördert wird und wobei das Blähen der Sandkörner (1) in der oberen Hälfte, vorzugsweise im obersten Drittel der Förderstrecke (4) erfolgt.

2. Verfahren nach Anspruch 1, **dadurch gekennzeichnet, dass** bei Detektion einer ersten Verringerung der Temperatur des Materials (1) zwischen zwei aufeinander folgenden Positionen (9) entlang der Förderstrecke (4) die Heizelemente (6) entlang der verbleibenden Förderstrecke (4) in Abhängigkeit von der kritischen Temperatur geregelt werden, um eine Zunahme der Materialtemperatur entlang der verbleibenden Förderstrecke (4) auf oder über die kritische Temperatur zu verhindern oder gezielt zu ermöglichen.

3. Verfahren nach einem der Ansprüche 1 bis 2, **dadurch gekennzeichnet, dass** die Temperaturänderung des Materials (1) entlang der Förderstrecke (4) indirekt durch Bestimmung einer Leistungsaufnahme der Heizelemente (6) gemessen wird.

4. Verfahren nach einem der Ansprüche 1 bis 3, **dadurch gekennzeichnet, dass** das Material (1) in der Luftmenge dispergiert wird, vorzugsweise bevor das Material (1) in den Ofenschacht (3) eintritt.

5. Verfahren nach Anspruch 4, **dadurch gekennzeichnet, dass** das Dispergieren mittels Druckluft (30) in einer Feststoff/Luft-Düse (10), vorzugsweise mit einem nachgeschalteten, an den Ofenschacht (3) anschließenden Diffusor (11), erfolgt.

6. Verfahren nach einem der Ansprüche 1 bis 5, **dadurch gekennzeichnet, dass** das Austragen des geblähten Materials (29) gemeinsam mit im Ofenschacht (3) erhitzter Luft in einem Gas-Material-Strom (12) erfolgt.

7. Verfahren nach Anspruch 6, **dadurch gekennzeichnet, dass** dem Gas-Material-Strom (12) Kühlluft beigemengt wird, um das geblähte Material (29) zu kühlen.

8. Verfahren nach einem der Ansprüche 6 bis 7, **dadurch gekennzeichnet, dass** das geblähte Material (29) aus dem Gas-Material-Strom (12) mittels eines Filters (13) abgeschieden wird.

9. Verfahren nach Anspruch 8, **dadurch gekennzeichnet, dass** das Abscheiden mittels des Filters (13) erfolgt, nachdem das geblähte Material (29) auf eine Verarbeitungstemperatur abgekühlt worden ist, wobei die Verarbeitungstemperatur vorzugsweise kleiner gleich 100°C ist.

10. Verfahren nach einem der Ansprüche 1 bis 9, **dadurch gekennzeichnet, dass** die Luftmenge so bemessen und aufgegeben wird, dass das aufgegebene Material (1) im Ofenschacht (3) nicht gegen die Luftströmung (14) nach unten fällt.

11. Verfahren nach einem der Ansprüche 1 bis 10, **dadurch gekennzeichnet, dass** die Luftmenge so bemessen und aufgegeben wird, dass an einem oberen Ende (18) des Ofenschachtes (3) eine mittlere Geschwindigkeit (vₐ) der Luftströmung (14) in einem Bereich von 50% bis 95% einer maximalen Geschwindigkeit (v_{b,max}) einer Grenzschichtströmung (15) liegt, wobei die Grenzschichtströmung (15) durch die Luftströmung (14) im Bereich einer den Ofenschacht (3) radial begrenzenden Innenwand (16) gebildet wird und eine gegenüber der restlichen Luftströmung (14) erhöhte Konzentration an Material (1) aufweist und wobei sich die mittlere Geschwindigkeit (vₐ) der Luftströmung (14) durch Mittelung der Geschwindigkeit (v) der Luftströmung (14) radial von einem radialen Zentrum (17) des Ofenschachts (3) bis zur Innenwand (16) ergibt.

12. Verfahren nach einem der Ansprüche 1 bis 11, **dadurch gekennzeichnet, dass** die Größe und/oder Dichte der geblähten Sandkörner (29) bestimmt wird und dass Prozessparameter in Abhängigkeit der Größe und/oder Dichte der geblähten Sandkörner (29) adaptiert werden, sodass
die geblähten Sandkörner (29) einen mittleren Durchmesser kleiner gleich 150 µm, bevorzugt kleiner gleich 100 µm, besonders bevorzugt kleiner gleich 75 µm aufweisen.

13. Verfahren nach einem der Ansprüche 1 bis 12, **dadurch gekennzeichnet, dass** nach dem Austragen die Größe und/oder Dichte der geblähten Sandkörner (29) bestimmt wird.

14. Vorrichtung zur Herstellung eines geblähten Granulats (29) aus einem sandkornförmigen Material (1), umfassend einen im Wesentlichen senkrecht stehenden Ofen (2) mit einem Ofenschacht (3), der ein oberes Ende (18) und ein unteres Ende (19) aufweist, wobei zwischen den beiden Enden (18, 19) eine Förderstrecke (4) verläuft, welche durch mehrere, vertikal voneinander getrennt angeordnete Heizzonen (5) führt, wobei die Heizzonen (5) jeweils zumindest ein voneinander unabhängig steuerbares Heizelement (6) aufweisen, um das Material (1) auf eine kritische Temperatur zu erhitzen und die Sandkörner (1) zu blähen, **dadurch gekennzeichnet, dass** mindestens ein Zuführmittel (10) vorgesehen ist, um das ungeblähte Material (1) gemeinsam mit einer Luftmenge am unteren Ende (19) des Ofenschachts (3) in Richtung oberes Ende (18) des Ofenschachts (3) so in den Ofenschacht (3) einzublasen, dass die Luftmenge eine von unten nach oben strömende Luftströmung (14) ausbildet, mittels welcher das Material (1) von unten nach oben entlang der Förderstrecke (4) gefördert wird, um in der oberen Hälfte, vorzugsweise im obersten Drittel der Förderstrecke (4) gebläht zu werden.

15. Vorrichtung nach Anspruch 14, **dadurch gekennzeichnet, dass** Materialtemperaturmessmittel zur direkten und/oder indirekten Messung der Temperatur und/oder der Temperaturänderung des Materials (1) vorgesehen sind sowie eine Regel- und Steuereinheit, die mit den Materialtemperaturmessmitteln und mit den Heizelementen (6) der Heizzonen (5) verbunden ist, um eine erste Verringerung der Temperatur des Materials (1), bevorzugt von mindestens 20°C, zwischen zwei aufeinander folgenden Positionen (9) entlang der Förderstrecke (4) zu detektieren, und dass die Heizelemente (6) durch die Regel- und Steuereinheit in Abhängigkeit von der kritischen Temperatur regelbar sind, um eine Zunahme der Materialtemperatur entlang der verbleibenden Förderstrecke (4) auf oder über die kritische Temperatur zu verhindern oder gezielt zu ermöglichen.

16. Vorrichtung nach einem der Ansprüche 14 bis 15, **dadurch gekennzeichnet, dass** das mindestens eine Zuführmittel eine Feststoff/Luft-Düse (10) umfasst, welcher Druckluft (30) und das ungeblähte Material (1) zuführbar sind, um das Material (1) in der Luftmenge zu dispergieren.

17. Vorrichtung nach Anspruch 16, **dadurch gekennzeichnet, dass** die Vorrichtung weiters einen Diffusor (11) umfasst, der der Feststoff/Luft-Düse (10) nachgeschaltet ist und an das untere Ende (19) des Ofenschachts (3) anschließt.

18. Vorrichtung nach Anspruch 17, **dadurch gekennzeichnet, dass** der Diffusor (11) mit einem radialen lichten Endquerschnitt (22) an das untere Ende des Ofenschachts (3) anschließt, der gleich einem radialen lichten Eintrittsquerschnitt (23) des Ofenschachts (3) an dessen unterem Ende (19) ist.

19. Vorrichtung nach einem der Ansprüche 14 bis 18, **dadurch gekennzeichnet, dass** ein Filter (13) vorgesehen ist, um das geblähte Material (1) aus einem am oberen Ende (18) aus dem Ofenschacht (3) entweichenden Gas-Material-Strom (12) abzuscheiden.

20. Vorrichtung nach einem der Ansprüche 14 bis 19, **dadurch gekennzeichnet, dass** mindestens ein Kühlluftzuführmittel (25) vorgesehen ist, um einem am oberen Ende (18) aus dem Ofenschacht (3) entweichenden Gas-Material-Strom (12) Kühlluft zur Kühlung des geblähten Materials (1) zuzuführen.

21. Vorrichtung nach Anspruch 20, sofern abhängig von Anspruch 19, **dadurch gekennzeichnet, dass** das mindestens eine Kühlluftzuführmittel (25) dem Filter (13) vorgeschaltet ist.

22. Vorrichtung nach einem der Ansprüche 14 bis 21, **dadurch gekennzeichnet, dass** Mittel (20, 21) zur Bestimmung der Größe und/oder der Dichte der geblähten Sandkörner (29) vorgesehen sind.

## Claims

1. A method for producing an expanded granulate (29) made of a sand grain-shaped mineral material (1) using a propellant, e.g. an expanded granulate of perlite (1) or obsidian sand; wherein the material (1) is fed to a substantially upright furnace (2); wherein the material (1) is conveyed along a conveying path (4) through a plurality of vertically separated heating zones (5) in a furnace shaft (3) of the furnace (2), wherein each heating zone (5) can be heated by at least one independently controllable heating element (6); wherein the material (1) is heated to a critical temperature at which the surfaces of the sand grains (1) become plastic and the sand grains (1) are expanded through the propellant; wherein the expanded material (29) is discharged from the furnace (2), **characterized in that** the material (1) is fed together with an amount of air from below, wherein the material (1) is conveyed from bottom to top along the conveying path (4) by means of the amount of air which flows from bottom to top within the furnace shaft (3) and forms an air flow (14), and wherein the expanding of the sand grains (1) occurs in the upper half, preferably in the uppermost third, of the conveying path (4).

2. A method according to claim 1, **characterized in that** upon detection of a first reduction of the temperature of the material (1) between two successive positions (9) along the conveying path (4) the heating elements (6) are controlled along the remaining conveying path (4) depending on the critical temperature in order to prevent or specifically allow an increase in the material temperature along the remaining conveying path (4) to or above the critical temperature.

3. A method according to one of the claims 1 to 2, **characterized in that** the temperature change of the material (1) along the conveying path (4) is measured indirectly by determining a power consumption of the heating elements (6).

4. A method according to one of claims 1 to 3, **characterized in that** the material (1) is dispersed in the amount of air, preferably before the material (1) enters the furnace shaft (3).

5. A method according to claim 4, **characterized in that** the dispersion is carried out by means of compressed air (30) in a solid/air nozzle (10), preferably with a downstream diffuser (11), which connects to the furnace shaft (3).

6. A method according to one of the claims 1 to 5, **characterized in that** the discharge of the expanded material (29) takes place together with air heated in the furnace shaft (3) in a gas-material stream (12).

7. A method according to claim 6, **characterized in that** cooling air is added to the gas-material stream (12) in order to cool the expanded material (29).

8. A method according to one of claims 6 to 7, **characterized in that** the expanded material (29) is separated from the gas-material stream (12) by means of a filter (13).

9. A method according to claim 8, **characterized in that** the separation takes place by means of the filter (13) after the expanded material (29) has been cooled to a processing temperature, wherein the processing temperature is preferably less than or equal to 100°C.

10. A method according to one of the claims 1 to 9, **characterized in that** the amount of air is dimensioned and supplied in such a way that the supplied material (1) in the furnace shaft (3) does not fall downwardly against the air flow (14).

11. A method according to one of the claims 1 to 10, **characterized in that** the amount of air is dimensioned and supplied in such a way that at an upper end (18) of the furnace shaft (3) an average velocity (vₐ) of the air flow (14) lies in a range of 50% to 95% of a maximum velocity (v_{b,max}) of a boundary layer flow (15), wherein the boundary layer flow (15) is formed by the air flow (14) in the region of an inner wall (16) radially bounding the furnace shaft (3) and has an increased concentration of material (1) compared to the remaining air flow (14), and wherein the average velocity (vₐ) of the air flow (14) is determined by averaging the velocity (v) of the air flow (14) radially from a radial center (17) of the furnace shaft (3) to the inner wall (16).

12. A method according to one of the claims 1 to 11, **characterized in that** the size and/or the density of the expanded sand grains (29) is determined and that process parameters are adapted depending on the size and/or density of the expanded sand grains (29), so that the expanded sand grains (29) have an average diameter less than or equal to 150 µm, preferably less than or equal to 100 µm, particularly preferably less than or equal to 75 µm.

13. A method according to one of the claims 1 to 12, **characterized in that** after discharging the size and/or density of the expanded sand grains (29) is determined.

14. A device for producing an expanded granulate (29) made of a sand grain-shaped material (1), comprising a substantially upright furnace (2) with a furnace shaft (3) having an upper end (18) and a lower end (19), wherein a conveying path (4) extends between the two ends (18, 19) and passes through a plurality of vertically separated heating zones (5), wherein the heating zones (5) each have at least one independently controllable heating element (6) to heat the material (1) to a critical temperature and to expand the sand grains (1), **characterized in that** at least one feeding means (10) is provided in order to inject the unexpanded material (1) together with an amount of air at the bottom end (19) of the furnace shaft (3) in the direction of the upper end (18) of the furnace shaft (3) into the furnace shaft (3) in such a way that the amount of air forms an upwardly flowing air flow (14), by means of which the material (1) is conveyed from bottom to top along the conveying path (4) in order to be expanded in the upper half, preferably in the uppermost third, of the conveying path (4).

15. A device according to claim 14, **characterized in that** material temperature measuring means for direct and/or indirect measurement of the temperature and/or the temperature change of the material (1) are provided, as well as a regulation and control unit, which is connected to the material temperature measuring means and the heating elements (6) of the heating zones (5), in order to detect a first reduction of the temperature of the material (1), preferably of at least 20°C, between two successive positions (9) along the conveying path (4), and that the heating elements (6) can be controlled by the regulation and control unit depending on the critical temperature in order to prevent or specifically allow an increase in the material temperature along the remaining conveying path (4) to or above the critical temperature.

16. A device according to one of the claims 14 to 15, **characterized in that** the at least one feeding means comprises a solid/air nozzle (10), to which compressed air (30) and the unexpanded material (1) can be fed in order to disperse the material (1) in the amount of air.

17. A device according to claim 16, **characterized in that** the device further comprises a diffuser (11) which is provided downstream of the solid/air nozzle (10) and is connected to the lower end (19) of the furnace shaft (3).

18. A device according to claim 17, **characterized in that** the diffuser (11) is connected to the lower end of the furnace shaft (3) with a radial clear end cross-section (22), which is equal to a radial clear inlet cross-section (23) of the furnace shaft (3) at the lower end (19) thereof.

19. A device according to one of the claims 14 to 18, **characterized in that** a filter (13) is provided in order to separate the expanded material (1) from a gas-material stream (12) emerging at the upper end (18) from the furnace shaft (3).

20. A device according to one of the claims 14 to 19, **characterized in that** at least one cooling-air feeding means (25) is provided in order to supply cooling air for cooling the expanded material (1) to the gas-material stream (12) emerging at the upper end (18) from the furnace shaft (3).

21. A device according to claim 20, if dependent on claim 19, **characterized in that** the at least one cooling-air feeding means (25) is connected upstream of the filter (13).

22. A device according to one of claims 14 to 21, **characterized in that** means (20, 21) for determining the size and/or the density of the expanded sand grains (29) are provided.

## Revendications

1. Procédé pour la fabrication de granulés expansés (29) à partir de matière minérale sableuse (1) avec un agent porogène, par exemple de granulés expansés de sable de perlite (1) ou d'obsidienne, dans lequel la matière (1) est déposée dans un four (2) sensiblement vertical, dans lequel la matière (1) est transportée dans une cuve de four (3) du four (2) le long d'un trajet de transport (4) à travers plusieurs zones de chauffe (5) séparées les unes des autres dans le sens vertical, chaque zone de chauffe (5) pouvant être chauffée par au moins un élément chauffant (6) qui peut être commandé indépendamment, dans lequel la matière (1) est chauffée pendant ce temps à une température critique à laquelle les surfaces des grains de sable (1) deviennent plastique et les grains de sable (1) sont expansés sous l'effet de l'agent porogène, dans lequel la matière expansée (29) est extraite du four (2), **caractérisé en ce que** le dépôt de la matière (1) s'effectue par le bas en même temps qu'un volume d'air, la matière (1) étant transportée de bas en haut le long du trajet de transport (4) au moyen du volume d'air qui forme un flux d'air (14) circulant de bas en haut dans la cuve de four (3) et l'expansion des grains de sable (1) se produisant dans la moitié supérieure, de préférence dans le tiers supérieur, du trajet de transport (4).

2. Procédé selon la revendication 1, **caractérisé en ce que** lorsqu'une première baisse de la température de la matière (1) entre deux positions (9) successives le long du trajet de transport (4) est détectée, les éléments chauffants (6) le long du reste du trajet de transport (4) sont régulés en fonction de la température critique, afin d'empêcher ou de permettre de façon ciblée une élévation de la température de la matière le long du reste du trajet de transport (4) jusqu'à la température critique ou au-delà.

3. Procédé selon l'une des revendications 1 à 2, **caractérisé en ce que** le changement de température de la matière (1) le long du trajet de transport (4) est mesuré indirectement par la détermination d'une puissance absorbée des éléments chauffants (6).

4. Procédé selon l'une des revendications 1 à 3, **caractérisé en ce que** la matière (1) est dispersée dans le volume d'air, de préférence avant que la matière (1) entre dans la cuve de four (3).

5. Procédé selon la revendication 4, **caractérisé en ce que** la dispersion est effectuée au moyen d'air comprimé (30) dans une buse à matière solide et à air (10), de préférence avec un diffuseur (11) monté en aval qui fait suite à la cuve de four (3).

6. Procédé selon l'une des revendications 1 à 5, **caractérisé en ce que** l'extraction de la matière expansée (29) s'effectue en même temps que l'air chauffé dans la cuve de four (3) dans un flux de gaz et de matière (12).

7. Procédé selon la revendication 6, **caractérisé en ce que** de l'air de refroidissement est ajouté au flux de gaz et de matière (12) afin de refroidir la matière expansée (29).

8. Procédé selon l'une des revendications 6 à 7, **caractérisé en ce que** la matière expansée (29) est séparée du flux de gaz et de matière (12) au moyen d'un filtre (13).

9. Procédé selon la revendication 8, **caractérisé en ce que** la séparation au moyen du filtre (13) a lieu après que la matière expansée (29) a été refroidie à une température de traitement, laquelle température de traitement est de préférence inférieure ou égale à 100°C.

10. Procédé selon l'une des revendications 1 à 9, **caractérisé en ce que** le volume d'air est dimensionné et amené de telle manière que la matière (1) déposée ne tombe pas vers le bas dans la cuve de four (3) en sens inverse du flux d'air (14).

11. Procédé selon l'une des revendications 1 à 10, **caractérisé en ce que** le volume d'air est dimensionné et amené de telle manière qu'à une extrémité supérieure (18) de la cuve de four (3), une vitesse moyenne (vₐ) du flux d'air (14) se situe dans une plage de 50 % à 95 % d'une vitesse maximale (v_{b,max}) d'un flux d'interface (15), le flux d'interface (15) étant formé par le flux d'air (14) dans la zone d'une paroi intérieure (16) délimitant la cuve de four (3) dans le sens radial et présentant par rapport au reste du flux d'air (14) une concentration accrue de matière (1), et la vitesse moyenne (vₐ) du flux d'air (14) résultant de la moyenne de la vitesse (v) du flux d'air (14) dans le sens radial entre un centre radial (17) de la cuve de four (3) et la paroi intérieure (16).

12. Procédé selon l'une des revendications 1 à 11, **caractérisé en ce que** la taille et/ou la densité des grains de sable expansés (29) sont déterminées et **en ce que** des paramètres de process sont adaptés en fonction de la taille et/ou de la densité des grains de sable expansés (29), de sorte que les grains de sable expansés (29) ont un diamètre moyen inférieur ou égal à 150 µm, de préférence inférieur ou égal à 100 µm, en particulier inférieur ou égal à 75 µm.

13. Procédé selon l'une des revendications 1 à 12, caractérisé en que la taille et/ou la densité des grains de sable expansés (29) sont déterminées après l'extraction.

14. Dispositif pour la fabrication de granulés expansés (29) à partir de matière minérale sableuse (1), comprenant un four (2) sensiblement vertical avec une cuve de four (3), qui présente une extrémité supérieure (18) et une extrémité inférieure (19), un trajet de transport (4) passant entre les deux extrémités (18, 19) et à travers plusieurs zones de chauffe (5) séparées les unes des autres dans le sens vertical, chaque zone de chauffe (5) comportant au moins un élément chauffant (6) qui peut être commandé indépendamment pour chauffer la matière (1) à une température critique et expanser les grains de sable (1), **caractérisé en ce qu'**il est prévu au moins un moyen d'alimentation (10) pour injecter la matière non expansée (1) dans la cuve de four (3) avec un volume d'air à l'extrémité inférieure (19) de la cuve de four (3) vers l'extrémité supérieure (18) de la cuve de four (3) de telle manière que le volume d'air forme un flux d'air (14) qui s'écoule vers le bas, au moyen duquel la matière (1) est transportée de bas en haut le long du trajet de transport (4) pour être expansée dans la moitié supérieure, de préférence dans le tiers supérieur, du trajet de transport (4).

15. Dispositif selon la revendication 14, **caractérisé en ce que** des moyens de mesure de la température de la matière sont prévus pour la mesure directe et/ou indirecte de la température et/ou du changement de température de la matière (1), ainsi qu'une unité de régulation et de commande qui est reliée avec les moyens de mesure de la température de la matière et avec les éléments chauffants (6) des zones de chauffe (5) pour détecter une première baisse de la température de la matière (1), de préférence d'au moins 20 °C, entre deux positions (9) successives le long du trajet de transport (4), et **en ce que** les éléments chauffants (6) peuvent être régulés par l'unité de régulation et de commande en fonction de la température critique, afin d'empêcher ou de permettre de façon ciblée une élévation de la température de la matière jusqu'à la température critique ou au-delà le long du reste du trajet de transport (4).

16. Dispositif selon l'une des revendications 14 à 15, **caractérisé en ce que** l'au moins un moyen d'alimentation comprend une buse à matière solide et à air (10) à laquelle de l'air comprimé (30) et la matière non expansée (1) peuvent être amenés pour disperser la matière (1) dans le volume d'air.

17. Dispositif selon la revendication 16, **caractérisé en ce qu'**il comprend en outre un diffuseur (11) monté après la buse à matière solide et à air (10) et qui se raccorde à l'extrémité inférieure (19) de la cuve de four (3).

18. Dispositif selon la revendication 17, **caractérisé en ce que** le diffuseur (11) se raccorde à l'extrémité inférieure de la cuve de four (3) par une section d'extrémité libre radiale (22) qui est égale à une section d'entrée libre radiale (23) de la cuve de four (3) à son extrémité inférieure (19).

19. Dispositif selon l'une des revendications 14 à 18, **caractérisé en ce qu'**un filtre (13) est prévu pour séparer la matière expansée (1) d'un flux de gaz et de matière (12) qui s'échappe de la cuve de four (3) à l'extrémité supérieure (18).

20. Dispositif selon l'une des revendications 14 à 19, **caractérisé en ce qu'**au moins un moyen d'acheminement de réfrigérant (25) est prévu pour amener de l'air de refroidissement au flux de gaz et de matière (12) s'échappant de la cuve de four (3) à l'extrémité supérieure (18) afin de refroidir la matière expansée (1).

21. Dispositif selon la revendication 20, si elle est dépendante de la revendication 19, **caractérisé en ce que** l'au moins un moyen d'acheminement de réfrigérant (25) est monté avant le filtre (13).

22. Dispositif selon l'une des revendications 14 bis 21, **caractérisé en ce que** des moyens (20, 21) sont prévus pour déterminer la taille et/ou la densité des grains de sable expansés (29).
